# EUROPÄISCHE PATENTSCHRIFT

(11) **EP 1 795 765 B1**
(45) Veröffentlichungstag und Bekanntmachung des Hinweises auf die Patenterteilung: **11.12.2013**
(21) Anmeldenummer: 06122376.4
(22) Anmeldetag: 16.10.2006
(51) Int. Cl.: F15B 11/16, A01D 69/03

(54) **Hydrauliksystem für eine selbstfahrende Erntemaschine**
Hydraulic system for an agricultural harvesting machine
Système hydraulique pour une moissonneuse autotractée

(30) Priorität: 09.12.2005 DE 102005059351
(43) Veröffentlichungstag der Anmeldung: 13.06.2007
(73) Patentinhaber: CLAAS Selbstfahrende Erntemaschinen GmbH, 33428 Harsewinkel (DE)
(72) Erfinder: Dückinghaus, Heinrich, 33649 Bielefeld (DE); Strieker, Norbert, 33415 Verl (DE); Schlichting, Dirk, 33100 Paderborn (DE); Eis, Günter, 33428 Harsewinkel (DE)
(74) Vertreter: Ellerbrächter, Dirk

(56) Entgegenhaltungen:
- EP-A1- 0 729 712
- WO-A1-2005/084413
- DE-A1- 4 311 191
- US-A- 3 548 951
- US-A1- 2004 040 276

## Beschreibung

Die Erfindung betrifft ein Hydrauliksystem für eine selbstfahrende Erntemaschine.

Aus der DE 43 11 191 ist ein Schlepper mit einem auf Load-Sensing-Basis beruhenden Schlepperhydrauliksystem bekannt, mit dem die Verbraucher auf dem Schlepper hydraulisch versorgt werden. Bei diesen Hydrauliksystemen erfolgt eine Rückmeldung des an dem Verbraucher anliegenden Drucks an die Hydraulikpumpe des Hydrauliksystems. Die Hydraulikpumpe ändert ihre Fördermenge in Abhängigkeit von dem an dem Verbraucher anliegenden Druck, um nur den notwendigen Bedarf zur Verfügung zu stellen. Das an den Schlepper anzuschließende Anbaugerät weist dagegen ein Konstantdrucksystem auf, welches einen konstanten Druck zum Betrieb der Hydraulikfunktionen des Anbaugerätes benötigt.

Nachteilig bei dieser bekannten Schlepper - Anbaugeräte - Kombination ist, dass zwischen dem Hydrauliksystem des Schleppers und dem Hydrauliksystem des Anbaugerätes eine Schnittstelle erforderlich ist, die den an der Hydraulikfunktion des Anbaugerätes anliegenden Druck an die Hydraulikpumpe übermittelt, damit diese auch bei einem angeschlossenen Anbaugerät mit einem optimalen Betriebsdruck arbeitet.

Aus der US 2004/040276 ist ein Hydrauliksystem für eine selbstfahrenden Erntemaschine bekannt, wie einen Mähdrescher oder Feldhäcksler, an die ein Vorsatzgerät anschließbar ist. Die Erntemaschine sowie das Vorsatzgerät weisen jeweils zumindest einen hydraulisch angetriebenen Verbraucher auf, die als Hydraulikzylinder ausgeführt sind.

Der Erfindung liegt daher die Aufgabe zugrunde, die Nachteile des Standes der Technik zu vermeiden und ein einheitliches, einfaches Hydrauliksystem für die Verbraucher an einem Trägerfahrzeug und die Verbraucher an einer an dem Trägerfahrzeug koppelbaren Adaptiervorrichtung vorzuschlagen, dass eine hohe Reaktionsgeschwindigkeit und eine geringe Schwingungsneigung bei hoher Dynamik des Verbrauchers sowie einen hohen Wirkungsgrad aufweist.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem der oder die Verbraucher an eine gemeinsame hydraulische Druckleitung angeschlossen sind und die Druckleitung mit einem konstanten Hydraulikdruck beaufschlagt wird, ergibt sich ein einheitliches, einfaches Hydrauliksystem für die Verbraucher an einem Trägerfahrzeug und die Verbraucher an einem mit dem Trägerfahrzeug gekoppelten Vorsatzgerät.

Vorteilhafterweise durchläuft zumindest ein Verbraucher des Trägerfahrzeugs und/oder der Adaptiervorrichtung eine gegenüber den weiteren Verbrauchern schnellen Schaltzyklus, wobei der konstante Hydraulikdruck im Hydrauliksystem eine hohe Reaktionsgeschwindigkeit und eine geringe Schwingungsneigung bei hoher Dynamik des Verbrauchers ermöglicht.

In vorteilhafter Ausgestaltung der Erfindung ist der zumindest eine, einen schnellen Schaltzyklus durchlaufende Verbraucher als Bodenkopiervorrichtung ausgebildet wobei die Bodenkopiervorrichtung die Adaptiervorrichtung um quer zur Fahrtrichtung und/oder längs in Fahrtrichtung liegende Achsen verschwenken kann, so dass die Adaptiervorrichtung bodenkopierend mit einer definierten Schnitthöhe geführt wird.

In weitere vorteilhafter Ausgestaltung der Erfindung weist die Bodenkopiervorrichtung mehrere Hydraulikzylinder auf, wobei zwischen wenigstens einem Hydraulikzylinder und der Druckleitung wenigstens ein elektromagnetisch schaltbares Steuerventil angeordnet ist, so dass die Hydraulikzylinder wahlweise durch die Druckleitung druckbeaufschlagt oder gegen den Druck der Druckleitung abgesperrt oder zum Tank abgelassen und dadurch entlastet werden können.

Dadurch, dass das Steuerventil in Abhängigkeit von einem Bodenniveau geschaltet wird, werden die Hydraulikzylinder so ein- beziehungsweise ausgefahren, dass die Adaptiervorrichtung zur Bodenneigung des Feldbodens ausgerichtet wird.

Eine besonders einfache Ausführung der Erfindung ergibt sich, wenn das Bodenniveau mit wenigstens einem Taster sensiert wird, der in Abhängigkeit vom Bodenniveau wenigstens ein Abstandsignal generiert und an eine Steuereinheit übermittelt, so dass eine einfache Erfassung des Bodenniveaus möglich ist.

Wenn die Steuereinheit in Abhängigkeit von den Abstandsignalen Signale generiert und die Signale an das oder die Steuerventile übermittelt werden, werden die Steuerventile automatisch betätigt.

Eine besonders kostengünstige und betriebssichere Ausführung der Erfindung ergibt sich, wenn das elektromagnetische Steuerventil als Sitzventil ausgeführt ist.

Indem zwischen dem Verbraucher und der Druckleitung ein Druckreduzierventil angeordnet ist, kann der Druck auf einen für wenigstens einen Verbraucher maximal zulässigen Druck abgesenkt werden.

Ein reduzierter Leitungsaufwand für das Hydrauliksystem ergibt sich, wenn die Steuerventile in der Nähe der zugehörigen Verbraucher an dem Trägerfahrzeug oder der Adaptiervorrichtung in die Druckleitung integriert sind. Ebenso verkürzt sich durch diese Anordnung der Steuerventile die Reaktionszeit bei Ansteuerung der Verbraucher.

Ein besonders einfaches Hydrauliksystem ohne Druckreduzierventile ist möglich, wenn die Hydraulikzylinder zumindest teilweise für einen Druckbereich ausgelegt sind.

Eine besonders einfache und daher kostengünstige Ausführung der Erfindung ergibt sich, wenn der konstante Druck von einer druckgeregelten Verstellpumpe erzeugt wird, die mit der Druckleitung verbunden ist.

Die Verstellpumpe ist vorteilhafterweise als eine im Fördervolumen verstellbare Pumpe ausgeführt, wobei das Fördervolumen abhängig vom anstehenden Druck in

der Druckleitung oder einer elektrischen Steuereinrichtung regelbar ist, so dass auf einfache Weise das Fördervolumen der Verstellpumpe gesteuert werden kann.

Dadurch, dass die Verstellpumpe von einem Verbrennungsmotor angetrieben und die Verstellpumpe beim Start des Verbrennungsmotors drucklos geschaltet ist, wird vermieden, dass das Startmoment des Motors nicht zusätzlich durch das hydrostatische Drehmoment der Verstellpumpe vergrößert wird.

In weiterer Ausgestaltung der Erfindung ist der Verstellpumpe ein elektrisch ansteuerbares Wegeventil zugeordnet und wobei das Wegeventil nach dem Startvorgang des Verbrennungsmotors so geschaltet wird, dass die Verstellpumpe den hydraulischen Druck in der Druckleitung erzeugt, damit unmittelbar nach dem Start des Verbrennungsmotors die hydraulische Energie für die Verbraucher zur Verfügung steht.

In weitere Ausgestaltung der Erfindung weist die landwirtschaftliche Arbeitsmaschine wenigstens einen Variator auf, wobei mit dem Verbraucher das Untersetzungsverhältnis des Variators verstellbar ist, so dass mit dem konstanten Druck der Druckleitung eine permanente Regelung der Drehzahl der Arbeitsorgane am Trägerfahrzeug und/oder an der Adaptiervorrichtung erfolgen kann.

Vorteilhafterweise ist der landwirtschaftlichen Arbeitsmaschine eine Notlenkpumpe zugeordnet, die beim Anliegen eines Arbeitsdruckes in einer Außerbetriebsstellung verharrt und beim Abfall des Arbeitsdruckes in eine Betriebsstellung geschaltet wird, so dass die Arbeitsmaschine auch beim Ausfall des Verstellpumpe lenkbar bleibt.

Eine vorteilhafte Ausgestaltung der Erfindung ergibt sich, wenn der Kolben der Notlenkpumpe in der Betriebsstellung mit einem radgetriebenen Nocken in Wirkverbindung steht und die Drehbewegung des Nockens einen Pumpvorgang der Notlenkpumpe bewirkt, so dass die kinetische Energie der sich drehenden Antriebsräder zum Betrieb der Notlenkpumpe genutzt wird.

In der Druckleitung ist vorteilhafterweise ein Hydraulikmotor angeordnet, wobei der Hydraulikmotor ein Gebläse rotierend antreibt, wodurch das Gebläse als Stromregler wirkt.

Weitere vorteilhafte Ausgestaltungen sind Gegenstand weiterer Unteransprüche und werden nachfolgend an Hand des in einer Figur dargestellten Ausführungsbeispiels näher erläutert.

Es zeigen:
Fig. 1 eine schematische Seitenansicht eines Mähdreschers mit einem erfindungsgemäßen Hydrauliksystem.
Fig. 2 einen Ausschnitt eines erfindungsgemäßen Hydrauliksystem mit einer Notlenkpumpe und einer Lenkvorrichtung

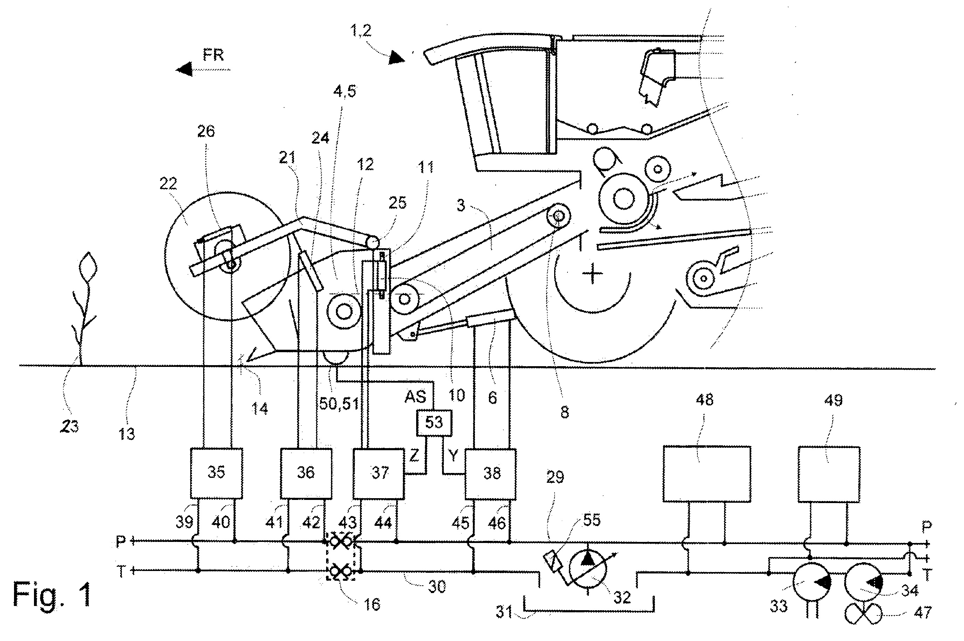

In der Fig. 1 ist eine als selbstfahrender Mähdrescher 1 ausgeführte landwirtschaftliche Arbeitsmaschine 2 in der Seitenansicht während der Erntefahrt dargestellt.
Frontseitig weist der Mähdrescher 1 einen Schrägförderer 3 auf, an dem ein als Schneidwerk 4 ausgeführtes Vorsatzgerät 5 angekoppelt ist.
Der Schrägförderer 3 wird über Hydraulikzylinder 6, die zylinderbodenseitig schwenkbeweglich an Konsolen des Trägerfahrzeugs 1 und kolbenstangenseitig schwenkbeweglich mit dem Schrägförderer 3 verbunden sind, um eine quer zur Fahrtrichtung FR angeordnete Schwenkachse 8 vertikal verschwenkbar geführt.
Zusätzlich sind dem Schrägförderer 3 in seinem frontseitigen Bereich beidseitig im wesentlichen vertikal ausgerichtete Hydraulikzylinder 10 zugeordnet, deren Kolbenstangen 11 an ihren freien Enden gelenkig mit dem rückwärtigen Bereich des Vorsatzgerätes 5 gekoppelt sind.
Eine Druckbeaufschlagung- oder Druckentlastung der betreffenden Hydraulikzylinder 10 führt zu einem Verschwenken des Schneidwerks 4 um eine in Fahrtrichtung des Mähdreschers 1 weisende Mittelachse 12 quer zu Fahrtrichtung FR des Mähdreschers 1. Die Hydraulikzylinder 6 und die Hydraulikzylinder 10 sind Bestandteil einer an späterer Stelle noch näher beschriebenen Bodenkopiervorrichtung mit der das Schneidwerk 4 in Abhängigkeit von dem aktuellen Bodenniveau 13 mit einer definierten Schnitthöhe 14 zum Feldboden bei der Erntefahrt geführt wird, woraus eine gleichmäßige Stoppelhöhe auf dem abgeerntetem Feld resultiert.

Das Schneidwerk 4 besteht aus einem Schneidtisch, und aus einer an zwei höhenverschwenkbaren Haspeltragarmen 21 an dem Schneidtisch befestigten Haspel 22. Die Haspel 22 sorgt für eine kontinuierliche Annahme des Erntegutes sowie für dessen gleichmäßige Förderung durch das Schneidwerk 4. Die Höhenlage der Haspel 22 richtet sich nach der Höhe und Dichte des Erntegutes auf dem Feld, und wird beispielsweise abhängig von der Schnitthöhe 14 vom Bediener eingestellt. Zur Einstellung der Haspel sind zwischen dem Schneidtisch und den Haspeltragarmen 21 zwei Hydraulikzylinder 24 angelenkt, mit denen die Haspeltragarme 21 um einen Gelenkpunkt 25 drehend, verschwenkt werden und dabei die Höhenlage der Haspel 22 ändern. Zusätzlich sind zwischen den Haspeltragarmen 21 und der Haspel 22 zwei weitere Hydraulikzylinder 26 angebracht, mit denen die Lage der Haspel 22 in horizontaler Richtung in Bezug zum Schneidtisch eingestellt wird.

Mit dem Schneidwerk 4 wird das Erntegut 23 geschnitten und das geschnittene Erntegut 23 an den Schrägförderer 3 übergeben, der das Erntegut an die bekannten und daher an dieser Stelle nicht näher erläuterten Arbeitsorgane im Maschinengehäuses des Mähdreschers 1 übergibt.

Die an dem Mähdrescher 1 angelenkten Hydraulikzylinder 6 für den Längsneigungsausgleich des Schneidwerks 4 als auch die Hydraulikzylinder 10 für die Querneigung des Schneidwerks 4 sowie die an dem Vorsatzgerät 5 angelenkten Hydraulikzylinder 24 zur Höhenverstellung der Haspel 22 und die Hydraulikzylinder 26 zur Horizontalverstellung der Haspel 22 sind auf an späterer Stelle noch näher erläuterter Weise erfindungsgemäß an eine hydraulische Druckleitung 29 angeschlossen, die mit einem konstanten hydraulischen Druck beaufschlagt wird.

Hierzu ist die durch den Mähdrescher 1 geführte Druckleitung 29 mit der Druckseite einer druckgeregelte Verstellpumpe 32 verbunden, die die Druckleitung 29 druckbeaufschlagt. Die Verstellpumpe 32 erzeugt einen konstanten Druck, der etwa 180 bis 230 bar beträgt. Die Druckleitung 29 ist vorteilhafterweise aus Metallrohr gefertigt, so dass über die Druckleitung 29 zusätzlich thermische Energie der Hydraulikflüssigkeit an die Umgebung abgegeben wird.
Mit der Druckleitung 29 können weitere Verbraucher 48, 49 analog zu der Bodenkopiervorrichtung 15 und den Hydraulikzylindern 24, 26 verbunden sein. Diese Verbraucher können beispielsweise die Lenkzylinder einer lenkbaren Hinterachse des Mähdreschers, die automatische Lenkeinrichtung des Mähdreschers oder die Hydraulikzylinder zum Verstellen der Position eines Verteilorgans am Mähdrescher sein, das erfindungsgemäße Hydrauliksystem ist beliebig erweiterbar.
Die als Hydraulikzylinder ausgeführten Verbraucher können auch zur Verstellung eines Variators dienen, wobei mit dem Hydraulikzylinder das Untersetzungsverhältnis des Variators verstellbar ist, um beispielsweise die Drehzahl an sich bekannter Arbeitsorgane wie beispielsweise einer Dreschtrommel des Mähdreschers 1 oder der Haspel 22 am Schneidwerk 4 anzupassen.
In dem dargestellten Ausführungsbeispiel sind in der Druckleitung 29 weiterhin hydraulische Motoren 33, 34 angeordnet, wobei beispielsweise der Hydraulikmotor 34 ein Gebläse 47 rotierend antreibt.
Zwischen den Hydraulikzylindern 6, 10, 24, 26 und der Druckleitung 29 sind jeweils elektromagnetisch betätigte Steuerventile 35, 36, 37, 38 geschaltet, wobei jedes Steuerventil 35, 36, 37, 38 separat über Zweigleitungen 39, 40, 41 , 42, 43, 44, 45, 46 mit der Druckleitung 29 und einer Rücklaufleitung 30 verbunden sind, wobei die Rücklaufleitung in einem Tank 31 mündet. Innerhalb der Druckleitung 29 und der Rücklaufleitung 30 ist eine Schnellkupplung 16 angeordnet, so dass das Vorsatzgerät 5 beispielsweise beim Wechsel des Vorsatzgerätes 5 hydraulisch abgekoppelt werden kann.
Die Steuerventile 35, 36 werden auf an sich bekannte Weise abhängig von einem Bedienbefehl des Fahrers des Mähdreschers 1 betätigt.
Die zu der Bodenkopiervorrichtung 15 gehörenden Steuerventile 37, 38 werden wahlweise manuell oder abhängig von dem aktuellen Bodenniveau 13 unterhalb des Schneidwerks 4 automatisch geschaltet. Hierzu sind unterhalb des Schneidwerks 4 quer zur Fahrtrichtung FR voneinander beabstandet Taster 50 angeordnet, die das Bodenniveau 13 sensieren und in Abhängigkeit vom aktuellen Bodenniveau 13 Abstandssignale AS generieren, die an eine mit den Tastern 50 verbundene Steuereinheit 53 übermittelt werden. Die Steuereinheit 53 generiert abhängig von dem Bodenprofil 13 Signale Y, Z die an die Steuerventile 37, 38 übermittelt werden, wodurch das Schneidwerk 4 bodenkopierend geführt wird. Die Bodenkopiervorrichtung 15 durchläuft gegenüber den anderen Verbrauchern 24, 26 einen schnellen Schaltzyklus.

Die an die Druckleitung 29 angeschlossenen Verbraucher 6, 10, 24, 26 sind für einen Druckbereich ausgelegt, der annähernd dem konstanten Druck der Verstellpumpe 32 entspricht. Für einen niedrigeren Druckbereich ausgelegte Verbraucher können über ein Druckregelventil ebenfalls an die Druckleitung 29 angeschlossen werden, um den konstanten Druck auf den für den Verbraucher maximal zulässigen Betriebsdruck zu reduzieren. Die Steuerventile 35, 36, 37, 38 sind in der Nähe der zugehörigen Verbraucher 6, 10, 24, 26 in die Druckleitung integriert, wodurch die Verbindungsleitungen zwischen den Steuerventilen 35, 36, 37, 38 und den Verbrauchern 6, 10, 24, 26 möglichst kurz ausgeführt werden können.

Die Verstellpumpe 32 wird von einem auf dem Mähdrescher 1 angeordneten Verbrennungsmotor angetrieben, der zusätzlich beispielsweise eine Hydraulikpumpe eines Fahrantriebs des Mähdreschers 1 und weitere Hydraulikpumpen weiterer Hydraulikkreisläufe auf dem Mähdrescher 1 antreiben kann. Beim Ausfall der Hydraulikpumpe des Fahrantriebs könnte für einen Notbetrieb kurzzeitig ein Einspeiseölstrom aus dem erfindungsgemäßen Hydrauliksystem entnommen und dem Hydraulikkreislauf des Fahrantriebs zugeführt werden.

Die Verstellpumpe 32 wird vor dem Start des Verbrennungsmotor drucklos geschaltet, damit der Anlasser beim Anlassen des Verbrennungsmotors nicht zusätzlich das hydrostatische Drehmoment der druckbeaufschlagten Verstellpumpe 32 überwinden muss. Dies kann beispielsweise dadurch erfolgen, dass die Verstellpumpe 32 über einen Druckregler 55 auf einen niedrigen Stand-By-Druck eingestellt wird. Nach dem Startvorgang wird der Druckregler 55 so verstellt, dass die Verstellpumpe 32 den hydraulischen Arbeitsdruck in der Druckleitung 29 erzeugt, so dass unmittelbar nach dem Start die hydraulische Energie für die Verbraucher 6, 10, 24, 26 zur Verfügung steht. Ebenso ist es möglich die Druckleitung 29 und den

Tank 31 beim Start des Verbrennungsmotors kurzzuschließen oder die Verstellpumpe 32 mechanisch vom Verbrennungsmotor abzukoppeln.

Die Verstellpumpe 32 ist als eine im Fördervolumen verstellbare Pumpe ausgeführt, bei der das Fördervolumen abhängig vom anstehenden Druck in der Zulaufseite der Druckleitung 29 oder einer elektrischen Steuereinrichtung regelbar ist, so dass auf einfache Weise das Fördervolumen der Verstellpumpe 32 gesteuert werden kann.

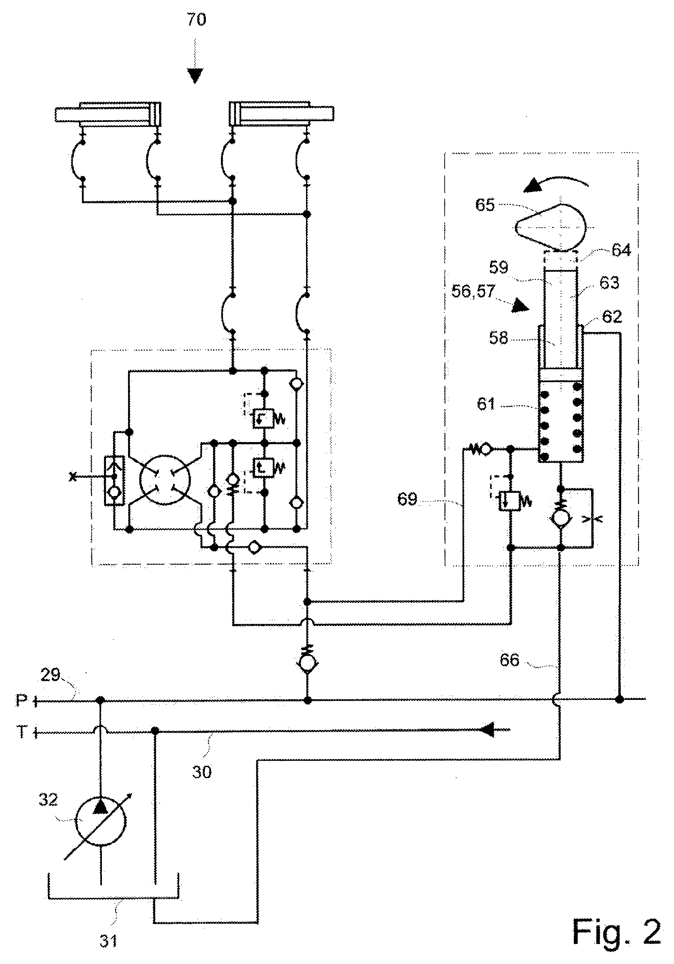

Fig. 2 zeigt einen Ausschnitt eines erfindungsgemäßen Hydrauliksystem mit einer Notlenkpumpe 56. Die Notlenkpumpe 56 besteht aus einem doppeltwirkenden Hydraulikzylinder 57 mit einem Kolben 58 mit beidseitiger Kolbenstange 59, wobei auf die Unterseite des Kolbens 58 eine Druckfeder 61 zur Rückstellung des Kolbens 58 angeordnet ist. Der obere Kolbenstangenraum 62 des Hydraulikzylinders 57 wird von der Zulaufseite der Druckleitung 29 druckbeaufschlagt, und hält den Kolben 58 gegen die Federkraft der Druckfeder 61 in einer Außerbetriebsstellung 63. Durch einen Druckabfall in der Druckleitung 29 fährt der Kolben 58 durch die Federkraft in eine Betriebsstellung 64 aus. In dieser Betriebsstellung 64 steht die Kolbenstange 59 des Kolbens 58 mit einem drehend angetriebenen Nocken 65 in Wirkverbindung der den Kolben 58 periodisch wieder in die Außerbetriebstellung 63 verschiebt und dadurch einen Pumpvorgang bewirkt. Der drehende Nocken 65 wird beispielsweise durch die drehenden Räder des fahrenden Mähdreschers angetrieben. Durch die hin- und hergehende Bewegung des Kolbens 58 saugt der Hydraulikzylinder 57 einen Fluidstrom über eine Ansaugleitung 66 aus dem Tank 31 den unteren Kolbenstangenraum. Der in den unteren Kolbenstangenraum gesaugte Förderstrom wird beim Fahren des Kolbens 58 in die Außerbetriebstellung 63 über eine Pumpleitung 69 zu einem an die Druckleitung 29 angeschlossenen Verbraucher 70 gepumpt. Dies ist vorteilhafterweise die Lenkvorrichtung des Mähdreschers, so dass der Mähdrescher auch beim Ausfall der Verstellpumpe 32 manövrierfähig bleibt.

Die erfindungsgemäße landwirtschaftliche Arbeitsmaschine kann auch als selbstfahrender Feldhäcksler ausgeführt sein, dem im vorderen Bereich ein beispielsweise als Maisgebiss oder Pickup ausgeführtes Vorsatzgerät zugeordnet ist.

**Bezugszeichenliste:**

| | | | |
|---|---|---|---|
| 1 | Mähdrescher | 36 | Steuerventil |
| 2 | Landwirtschaftliche Arbeitsmaschine | 37 | Steuerventil |
| 3 | Schrägförderer | 38 | Steuerventil |
| 4 | Schneidwerk | 39 | Zweigleitungen |
| 5 | Vorsatzgerät | 40 | Zweigleitungen |
| 6 | Hydraulikzylinder | 41 | Zweigleitungen |
| 8 | Schwenkachse | 42 | Zweigleitungen |
| 10 | Hydraulikzylinder | 43 | Zweigleitungen |
| 11 | Kolbenstange | 44 | Zweigleitungen |
| 12 | Mittelachse | 45 | Zweigleitungen |
| 13 | Bodenniveau | 46 | Zweigleitungen |
| 14 | Schnitthöhe | 47 | Gebläse |
| 16 | Schnellkupplung | 48 | Verbraucher |
| 21 | Haspeltragarm | 49 | Verbraucher |
| 22 | Haspel | 50 | Taster |
| 23 | Erntegut | 51 | Taster |
| 24 | Hydraulikzylinder | 53 | Steuereinheit |
| 25 | Gelenkpunkt | 55 | Druckregler |
| 26 | Hydraulikzylinder | 56 | Notlenkpumpe |
| 29 | Druckleitung | 57 | Hydraulikzylinder |
| 30 | Rücklaufleitung | 58 | Kolben |
| 31 | Tank | 59 | Kolbenstange |
| 32 | Verstellpumpe | 61 | Druckfeder |
| 33 | Hydraulikmotor | 62 | Kolbenstangenraum |
| 34 | Hydraulikmotor | 63 | Außerbetriebsstellung |
| 35 | Steuerventil | 64 | Betriebsstellung |
| 70 | Lenkvorrichtung | 65 | Nocken |
| | | 66 | Ansaugleitung |
| | | 69 | Pumpleitung |
| AS | Abstandsignal | | |
| FR | Fahrtrichtung | | |
| Y | Signal | | |
| Z | Signal | | |

## Patentansprüche

1. Hydrauliksystem einer landwirtschaftlichen Arbeitsmaschine (2), wobei die landwirtschaftliche Arbeitsmaschine (2) von einem Trägerfahrzeug (1) und zumindest einer Adaptiervorrichtung (4, 5) gebildet wird und das Trägerfahrzeug (1) und die Adaptiervorrichtung (4, 5) jeweils einen oder mehrere hydraulisch angetriebene Verbraucher (6, 10) umfassen,
**dadurch gekennzeichnet,**
**dass** die Verbraucher (6,10, 22, 26, 15) an eine gemeinsame hydraulische Druckleitung (29) angeschlossen sind und die Druckleitung (29) mit einem konstanten Hydraulikdruck beaufschlagt wird.

2. Hydrauliksystem einer landwirtschaftlichen Arbeitsmaschine nach Anspruch 1, **dadurch gekennzeichnet,**
**dass** zumindest ein Verbraucher (6, 10) des Trägerfahrzeugs (1) und/oder der Adaptiervorrichtung (4, 5) einen gegenüber den weiteren Verbrauchern (22, 26) schnellen Schaltzyklus durchläuft.

3. Hydrauliksystem nach Anspruch 2,
**dadurch gekennzeichnet,**
**dass** der zumindest eine, einen schnellen Schaltzyklus durchlaufende Verbraucher (6, 10) als Bodenkopiervorrichtung (15) ausgebildet ist und wobei die Bodenkopiervorrichtung (15) die Adaptiervorrichtung (4, 5) um quer zur Fahrtrichtung (FR) und/oder längs in Fahrtrichtung (FR) liegende Achsen (8, 12) verschwenken kann.

4. Hydrauliksystem nach Anspruch 3,
**dadurch gekennzeichnet,**
**dass** die Bodenkopiervorrichtung (15) mehrere Hydraulikzylinder (6, 10) aufweist, wobei zwischen wenigstens einem Hydraulikzylinder (6, 10) und der Druckleitung (29) wenigstens ein elektromagnetisch schaltbares Steuerventil (37, 38) angeordnet ist.

5. Hydrauliksystem nach Anspruch 4,
**dadurch gekennzeichnet,**
**dass** das Steuerventil (37, 38) in Abhängigkeit von einem Bodenniveau (13) geschaltet wird.

6. Hydrauliksystem nach Anspruch 5,
**dadurch gekennzeichnet,**
**dass** das Bodennivaau (13) mit wenigstens einem Taster (50, 51) sensiert wird, der in Abhängigkeit vom Bodenniveau (13) wenigstens ein Abstandsignal (AS) generiert und an eine Steuereinheit (53) übermittelt.

7. Hydrauliksystem nach Anspruch 6,
**dadurch gekennzeichnet,**
**dass** die Steuereinheit (53) in Abhängigkeit von den Abstandsignalen (AS) Signale (Y, Z) generiert und die Signale (Y, Z) an das oder die Steuerventile (37, 38) übermittelt.

8. Hydrauliksystem nach einem der Ansprüche 4 bis 7, **dadurch gekennzeichnet,**
**dass** das elektromagnetisch betätigte Steuerventil (35, 36, 37, 38) als Sitzventil ausgeführt ist.

9. Hydrauliksystem nach wenigstens einem der vorhergehenden Ansprüche,
**dadurch gekennzeichnet,**
**dass** zwischen dem wenigstens einen Verbraucher und der Druckleitung (29) ein Druckregelventil angeordnet ist.

10. Hydrauliksystem nach einem der Ansprüche 4 bis 8, **dadurch gekennzeichnet,**
**dass** das oder die Steuerventile (35, 36, 37, 38) in der Nähe der zugehörigen Verbraucher (6, 10, 24, 26) an dem Trägerfahrzeug (1, 2) oder der Adaptiervorrichtung (4, 5) in die Druckleitung (29) integriert sind.

11. Hydrauliksystem nach einem der Ansprüche 4 bis 8, **dadurch gekennzeichnet,**
**dass** die Hydraulikzylinder (6, 10, 24, 26) zumindest teilweise für einen Druckbereich ausgelegt sind.

12. Hydrauliksystem nach wenigstens einem der vorhergehenden Ansprüche,
**dadurch gekennzeichnet,**
**dass** der konstante Druck von einer druckgeregelten Verstellpumpe (32) erzeugt wird, die mit der Druckleitung (29) verbunden ist.

13. Hydrauliksystem nach Anspruch 12,
**dadurch gekennzeichnet,**
**dass** die druckgeregelte Verstellpumpe (32) als eine Im Fördervolumen einstellbare Pumpe ausgeführt ist, wobei das Fördervolumen abhängig vom anstehenden Druck in der Zulaufseite der Druckleitung (29) oder einer elektrischen Steuereinrichtung regelbar ist.

14. Hydrauliksystem nach einem der Ansprüche 12 oder 13,
**dadurch gekennzeichnet,**
**dass** die Verstellpumpe (32) von einem Verbrennungsmotor angetrieben wird und die Verstellpumpe (32) beim Start des Verbrennungsmotors drucklos schaltbar ist.

15. Hydrauliksystem nach Anspruch 14,
**dadurch gekennzeichnet,**
**dass** der Verstellpumpe (32) ein elektrisch ansteuerbares Schaltventil (55) zugeordnet ist und wobei das Schaltventil (55) nach dem Startvorgang des Verbrennungsmotors so geregelt wird, dass die Verstellpumpe (32) den hydraulischen Druck in der Druckleitung (29) erzeugt.

16. Hydrauliksystem nach wenigstens einem der vorhergehenden Ansprüche,
**dadurch gekennzeichnet,**
**dass** die landwirtschaftlichen Arbeitsmaschine (2) wenigstens einen Variator aufweist, wobei mit dem Verbraucher das Untersetzungsverhältnis des Variators verstellbar ist.

17. Hydrauliksystem nach wenigstens einem der vorhergehenden Ansprüche,
**dadurch gekennzeichnet,**
**dass** der landwirtschaftlichen Arbeitsmaschine (2) eine Notlenkpumpe (56) zugeordnet ist, die beim Anliegen eines Arbeitsdruckes in einer Außerbetriebsstellung (63) verharrt und beim Abfall des Arbeitsdruckes in eine Betriebsstellung (64) geschaltet wird.

18. Hydrauliksystem nach Anspruch 17,
**dadurch gekennzeichnet,**
**dass** in der Betriebsstellung (64) ein Kolben (58) der Notlenkpumpe (56) mit einem radgetriebenen Nocken (65) in Wirkverbindung steht und die Drehbewegung des Nockens (65) einen Pumpvorgang der Notlenkpumpe (56) bewirkt.

19. Hydrauliksystem nach wenigstens einem der vorhergehenden Ansprüche,
**dadurch gekennzeichnet,**
**dass** in der Druckleitung (29) wenigstens ein Hydraulikmotor (34) angeordnet ist, wobei der Hydraulikmotor (34) ein Gebläse (47) rotierend antreibt.

## Claims

1. A hydraulic system of an agricultural working machine (2), wherein the agricultural working machine (2) is formed by a carrier vehicle (1) and at least one adaptor device (4, 5) and the carrier vehicle (1) and the adaptor device (4, 5) respectively include one or more hydraulically driven consumers (6, 10),
**characterised in that** the consumers (6, 10, 22, 26, 15) are connected to a common hydraulic pressure line (29) and the pressure line (29) is acted upon by a constant hydraulic pressure.

2. A hydraulic system of an agricultural working machine according to claim 1 **characterised in that** at least one consumer (6, 10) of the carrier vehicle (1) and/or the adaptor device (4, 6) runs through a switching cycle which is fast in comparison with the further consumers (22, 26).

3. A hydraulic system according to claim 2 **characterised in that** the at least one consumer (6, 10) which runs through a fast switching cycle is in the form of a ground copying device (15) and wherein the ground copying device (15) can pivot the adaptor device (4, 5) about axes (8, 12) which are disposed transversely relative to the direction of travel (FR) and/or longitudinally in the direction of travel (FR).

4. A hydraulic system according to claim 3 **characterised in that** the ground copying device (5) has a plurality of hydraulic cylinders (6, 10), wherein at least one electromagnetically switchable control valve (37, 38) is arranged between at least one hydraulic cylinder (6, 10) and the pressure line (29).

5. A hydraulic system according to claim 4 **characterised in that** the control valve (37, 38) is switched in dependence on a ground level (13).

6. A hydraulic system according to claim 5 **characterised in that** the ground level (13) is sensed with at least one sensing device (50, 51) which in dependence on the ground level (13) generates at least one spacing signal (AS) and communicates it to a control unit (53).

7. A hydraulic system according to claim 6 **characterised in that** in dependence on the spacing signals (AS) the control unit (53) generates signals (Y, Z) and communicates the signals (Y, Z) to the control valve or valves (37, 38).

8. A hydraulic system according to one of claims 4 to 7 **characterised in that** the electromagnetically actuated control valve (35, 36, 37, 38) is in the form of a seat valve.

9. A hydraulic system according to at least one of the preceding claims **characterised in that** a pressure regulating valve is arranged between the at least one consumer and the pressure line (29).

10. A hydraulic system according to one of claims 4 to 8 **characterised in that** the control valve or valves (35, 36, 37, 38) are integrated into the pressure line (29) in the proximity of the associated consumer (6, 10, 24, 26) on the carrier vehicle (1, 2) or the adaptor device (4, 5).

11. A hydraulic system according to one of claims 4 to 8 **characterised in that** the hydraulic cylinders (6, 10, 24, 26) are at least partially designed for a pressure range.

12. A hydraulic system according to one of the preceding claims **characterised in that** the constant pressure is produced by a pressure-regulated variable-displacement pump (32) connected to the pressure line (29).

13. A hydraulic system according to claim 12 **characterised in that** the pressure-regulated variable-displacement pump (32) is in the form of a pump which is adjustable in its delivery volume, wherein the delivery volume can be regulated in dependence on the prevailing pressure in the inlet side of the pressure line (29) or an electric control device.

14. A hydraulic system according to one of claims 12 and 13 **characterised in that** the variable-displacement pump (32) is driven by an internal combustion engine and the variable-displacement pump (32) can be switched into a pressure-less condition when the internal combustion engine is started.

15. A hydraulic system according to claim 14 **characterised in that** an electrically actuable switching valve (55) is associated with the variable-displacement pump (32) and wherein after the internal combustion engine starting operation the switching valve (55) is so regulated that the variable-displacement pump (32) produces the hydraulic pressure in the pressure line (29).

16. A hydraulic system according to at least one of the preceding claims **characterised in that** the agricultural working machine (2) has at least one variator, wherein the reduction ratio of the variator is adjustable with the consumer.

17. A hydraulic system according to at least one of the preceding claims **characterised in that** associated with the agricultural working machine (2) is an emergency steering pump (56) which remains in an inoperative position (63) when a working pressure is applied and which is switched into an operative position (64) when the working pressure drops off.

18. A hydraulic system according to claim 17 **characterised in that** in the operative position (64) a piston (58) of the emergency steering pump (56) is operatively connected to a wheel-driven cam (65) and the rotary movement of the cam (65) causes a pumping operation of the emergency steering pump (56).

19. A hydraulic system according to at least one of the preceding claims **characterised in that** at least one hydraulic motor (34) is arranged in the pressure line (29), wherein the hydraulic motor (34) drives a blower in rotation.

## Revendications

1. Système hydraulique d'une machine de travail agricole (2), laquelle machine de travail agricole (2) est formée par un véhicule porteur (1) et par au moins un dispositif adaptable (4, 5), le véhicule porteur (1) et le dispositif adaptable (4, 5) comprenant chacun un ou plusieurs organes utilisateurs (6, 10) entraînés hydrauliquement, **caractérisé en ce que** les organes utilisateurs (6, 10, 22, 26, 15) sont raccordés à une conduite de pression hydraulique commune (29), et la conduite de pression (29) est soumise à une pression hydraulique constante.

2. Système hydraulique d'une machine de travail agricole selon la revendication 1, **caractérisé en ce qu'**au moins un organe utilisateur (6, 10) du véhicule porteur (1) et/ou du dispositif adaptable (4, 5) accomplit un cycle de commutation rapide par rapport aux autres organes utilisateurs (22, 26).

3. Système hydraulique selon la revendication 2, **caractérisé en ce que** ledit au moins un organe utilisateur (6, 10) accomplissant un cycle de commutation rapide est réalisé sous la forme d'un dispositif suivant le profil du sol (15), lequel dispositif suivant le profil du sol (15) peut faire pivoter le dispositif adaptable (4, 5) autour d'axes (8, 12) situés transversalement à la direction de marche (FR) et/ou longitudinalement dans la direction de marche (FR).

4. Système hydraulique selon la revendication 3, **caractérisé en ce que** le dispositif suivant le profil du sol (15) comporte plusieurs vérins hydrauliques (6, 10), au moins une vanne de commande à commutation électromagnétique (37, 38) étant disposée entre au moins un vérin hydraulique (6, 10) et la conduite de pression (29).

5. Système hydraulique selon la revendication 4, **caractérisé en ce que** la vanne de commande (37, 38) est commutée en fonction d'un niveau de sol (13).

6. Système hydraulique selon la revendication 5, **caractérisé en ce que** le niveau de sol (13) est détecté au moyen d'au moins un palpeur (50, 51) qui génère au moins un signal de distance (AS) en fonction du niveau de sol (13) et qui le transmet à une unité de commande (53).

7. Système hydraulique selon la revendication 6, **caractérisé en ce que** l'unité de commande (53) génère des signaux (Y, Z) en fonction des signaux de distance (AS) et transmet les signaux (Y, Z) à la ou les vannes de commande (37, 38).

8. Système hydraulique selon une des revendications 4 à 7, **caractérisé en ce que** la vanne de commande à commande électromagnétique (35, 36, 37, 38) est réalisée sous la forme d'une vanne à siège.

9. Système hydraulique selon au moins une des revendications précédentes, **caractérisé en ce qu'**une vanne de régulation de pression est disposée entre ledit au moins un organe utilisateur et la conduite de pression (29).

10. Système hydraulique selon une des revendications 4 à 8, **caractérisé en ce que** la ou les vannes de commande (35, 36, 37, 38) sont intégrées dans la conduite de pression (29) à proximité des organes utilisateurs (6, 10, 24, 26) associés sur le véhicule porteur (1, 2) ou le dispositif adaptable (4, 5).

11. Système hydraulique selon une des revendications 4 à 8, **caractérisé en ce que** les vérins hydrauliques (6, 10, 24, 26) sont dimensionnés au moins en partie pour une plage de pression.

12. Système hydraulique selon au moins une des revendications précédentes, **caractérisé en ce que** la pression constante est produite par une pompe à débit variable, régulée en pression (32), qui est reliée à la conduite de pression (29).

13. Système hydraulique selon la revendication 12, **caractérisé en ce que** la pompe à débit variable régulée en pression (32) est réalisée sous la forme d'une pompe à volume de refoulement réglage, le volume de refoulement étant réglable en fonction de la pression présente du côté arrivée de la conduite de pression (29) ou d'un dispositif de commande électrique.

14. Système hydraulique selon une des revendications 12 ou 13, **caractérisé en ce que** la pompe à débit variable (32) est entraînée par un moteur à combustion, et la pompe à débit variable (32) peut être mise hors pression au démarrage du moteur à combustion.

15. Système hydraulique selon la revendication 14, **caractérisé en ce qu'**une vanne de commutation à commande électrique (55) est associée à la pompe à débit variable (32), laquelle vanne de commutation (55) est régulée après le démarrage du moteur à combustion de façon que la pompe à débit variable (32) produise la pression hydraulique dans la conduite de pression (29).

16. Système hydraulique selon au moins une des revendications précédentes, **caractérisé en ce que** la machine de travail agricole (2) présente au moins un variateur, le rapport de réduction du variateur étant réglable avec l'organe utilisateur.

17. Système hydraulique selon au moins une des revendications précédentes, **caractérisé en ce qu'**une pompe de direction d'urgence (56) est associée à la machine de travail agricole (2), laquelle reste dans une position hors service (63) en cas de présence d'une pression de travail et est mise dans une position de service (64) en cas de chute de la pression de travail.

18. Système hydraulique selon la revendication 17, **caractérisé en ce que**, dans la position de service (64), un piston (58) de la pompe de direction d'urgence (56) coopère avec une came (65) entraînée par les roues, et le mouvement de rotation de la came (65) déclenche un processus de pompage de la pompe de direction d'urgence (56).

19. Système hydraulique selon au moins une des revendications précédentes, **caractérisé en ce qu'**au moins un moteur hydraulique (34) est disposé dans la conduite de pression (29), lequel moteur hydraulique (34) entraîne en rotation un ventilateur (47).
